# EUROPEAN PATENT APPLICATION

(11) **EP 2 908 414 A1**
(43) Date of publication of application: **19.08.2015**
(21) Application number: 14155197.8
(22) Date of filing: 14.02.2014
(51) Int. Cl.: H02M 1/12, H02M 7/483

(54) **Balancing cell capacitor voltages of a modular multilevel converter**

(71) Applicant: ABB Technology AG, 8050 Zürich (CH)
(72) Inventor: Van-der-Merwe, Wim, 5405 Baden (CH)
(74) Representative: ABB Patent Attorneys

(57) **Abstract**

A modular multilevel converter (10) comprises at least one converter branch (20) with at least two series-connected converter cells (22), each converter cell (22) comprising a cell capacitor (30) and a semiconductor switch (34) for connecting the cell capacitor (30) to the branch (20) and for bypassing the cell capacitor (30), a controller (28) for controlling the converter cells (22) of the converter (10) with pulse width modulation according to a predefined switching frequency, and a band pass filter (42) connected to the converter branch (20), which is tuned to a multiple of the switching frequency.

## Description

### FIELD OF THE INVENTION

The invention relates to a modular multilevel converter and a method for balancing cell capacitor voltages of such a converter.

### BACKGROUND OF THE INVENTION

Modular multilevel converters may be characterized by converter branches that comprise series-connected converter cells and are usually used in medium and high voltage applications. The modular structure of a modular multilevel converter offers a number of advantages over other available multilevel converter topologies.

Many different control methodologies have been suggested for modular multilevel converters, and since as a rule the operation is dependent on the balancing of the cell capacitor voltages, all these control methods try to address this in some way. However, the control of the balancing of the converter cell capacitor voltages may be very complex.

A modular multilevel converter usually also exhibits a natural balancing (also called self-balancing) mechanism. For example, this mechanism may be activated when the different converter cells in a converter branch are supplied with the same switching information albeit phase shifted.

### DESCRIPTION OF THE INVENTION

It is an objective of the invention to support the self-balancing of a modular multilevel converter. It is a further objective of the invention to simplify the control of a modular multilevel converter.

These objectives are achieved by the subject-matter of the independent claims. Further exemplary embodiments are evident from the dependent claims and the following description.

An aspect of the invention relates to a modular multilevel converter. The converter may be adapted for converting a DC current into an AC current and/or vice versa. The converter may be adapted for converting a single or multi-phase current into another single or multi-phase. The converter may connect a load or power source with a power grid or may interconnect two power grids.

According to an embodiment of the invention, the converter comprises at least one converter branch with at least two series-connected converter cells, each converter cell comprising a cell capacitor and at least one semiconductor switch for connecting the cell capacitor to the branch and for bypassing the cell capacitor. In general, the converter may comprise any number of converter cells per converter branch. Each cell may be provided in a cell module carrying the cell capacitor and the semiconductor switch. This may characterize the modularity of the converter.

For a DC/AC (indirect) modular multilevel converter, each converter cell usually comprises a half bridge for connecting the cell capacitor to the branch and for bypassing the cell capacitor. For AC/AC (direct) or chainlike converters, each converter cell usually comprises a full bridge for connecting the cell capacitor to the branch and for bypassing the cell capacitor.

According to an embodiment of the invention, the converter comprises a controller for controlling the converter cells of the converter with pulse width modulation according to a predefined switching frequency. The controller may comprise a processor with corresponding software, a DSP or FPGA and/or may control the gate units of the converters for connecting and bypassing the converter cells.

For pulse width modulation, each converter cell may be associated with a periodic carrier signal having the switching frequency and the controller may be adapted for switching the converter cell, when a reference voltage crosses the carrier signal.

For pulse width modulation, the natural balancing mechanism may rely on the harmonic content of the converter currents. For example, when the converter is operated with interleaved carrier pulse width modulation, and the converter cell capacitors are all subject to the same voltage stress, the current spectrum of an N-cell modular multilevel converter only consists of the reference voltage frequencies and switching harmonics (and its basebands) at multiples ofNfs, where fₛ is the switching frequency.

With unmodified phase shifted carrier pulse width modulation, the inherent self-balancing mechanism of the converter results in a uniform distribution of voltage and current stress across all cell capacitors in the converter. Furthermore, since all semiconductor switches operate with the same switching frequency and the cell capacitor voltages are relatively balanced, this method ensures an even distribution of the switching losses across all converter cells.

A converter operating with unmodified phase shifted carrier pulse width modulation may allow a reduction of the switching frequency in very large converters with a large N. The implicit multiplication of the switching frequency may be of great benefit.

According to an embodiment of the invention, the converter comprises a band pass filter connected to the converter branch, which is tuned to a multiple of the switching frequency nfₛ, wherein, in particular n is a natural number different from N. With the band pass filter, the natural balancing of the converter is supported and/or may be accelerated. The band pass filter may be seen as a balance booster.

The band pass filter strengthens the natural balancing mechanism in the converter. This strengthened mechanism may optimize the inherent cell capacitor voltage control loop.

The relative size of the band pass filter may be small in comparison with the other components of the converter, such as the electric components of a converter cell. Since the balancing process depends on the harmonic current, the current and voltage rating of the filter may be in the region of less than 1% of the load current and voltage.

Should unbalance occur, the current spectrum will not only have components of Nfₛ but also may have components at other multiples of fₛ (and its basebands). These harmonics that usually only exist when unbalance is present interact with the individual cell switching functions to create a balancing quasi-steady-state DC component in the cell capacitor current that restores balance to the converter.

A band pass filter may be an electric component connected to the converter branch that has at least one resonant frequency. Currents with a frequency in a band around the resonant frequency may pass the band pass filter nearly unattenuated. Currents outside the resonant frequency band may be attenuated very strong.

The band pass filter may be inserted in shunt with the current path. Thus, the impedance at the resonant frequency of the band pass filter is reduced, increasing the harmonics at this frequency. If the resonant frequency of the band pass filter coincides with a multiple of fₛ that is not a multiple ofN, then the natural balancing of the converter is strengthened.

In general, the band pass filter may be composed of any electric components.

According to an embodiment of the invention, the band pass filter comprises an inductor and a capacitor connected in series. For example, the band pass filter may comprise an LCR notch filter tuned to any multiple of fₛ that is not a multiple of N.

According to an embodiment of the invention, the band pass filter comprises a resistor connected in series with a capacitor and/or an inductor. It may be possible that the resistance of the band pass filter is provided by the inner resistance of the inductor and/or capacitor. However, it also may be possible that the band pass filter comprises a physical resistor component.

According to an embodiment of the invention, the band pass filter comprises at least two parallel connected single band pass filters. A single band pass filter (having only one resonant frequency) may be duplicated to any number, wherein each single band pass filter is tuned to a different multiple of the switching frequency that is not a multiple of Nfₛ. For example, several band pass filter structures may be connected in parallel.

For the connecting of the band pass filter to the circuitry of the converter and/or the converter branch, several possibilities are possible. The band pass filter may be connected in the circulating current path.

According to an embodiment of the invention, the band pass filter is connected in parallel to the converter cells of the converter branch. The band pass filter may be connected with one end to a first of the converter cells and with another end to the last of the converter cells of a converter branch.

According to an embodiment of the invention, the converter branch comprises a branch inductor connected in series with the converter cells of the converter branch. Usually, a converter branch comprises a branch inductor for attenuating frequency in the output phase voltage higher than the frequencies of the reference voltage.

According to an embodiment of the invention, the band pass filter is connected with one end between the converter cells and the branch inductor. For example, the band pass filter is connected in parallel to the branch inductor.

The converter may comprise different topologies, in the following a half bridge converter with two series-connected converter branches and a full bridge chain-link converter are described as examples.

According to an embodiment of the invention, the converter comprises further two converter branches connected in series between a DC link and providing a phase output between the two converter branches, wherein each converter branch comprises a branch inductor connected between the converter cells of the converter branch and the phase output. In this case, each converter cell may comprise a half bridge.

For such a converter, the band pass filter may be connected in parallel to both branch inductors, the band bass filter may be connected in parallel to each branch inductor or the band pass filter may be interconnecting the phase output and a grounding point.

According to an embodiment of the invention, the converter comprises further three converter branches, which are delta-connected and which provide a phase output at an end of each branch, wherein each converter branch comprises a branch inductor connected between the converter cells of the converter branch and a phase output. In this case, each converter cell may comprise a full bridge. Such a delta-connected chain-link converter may also benefit from the band pass filter.

For such a converter, a band pass filter may be connected in parallel to the converter cells of each converter branch, a band bass filter may be connected in parallel to each branch inductor or a band bass filter may be connected with one end between the branch inductor and the converter cells of each converter branch and other ends of the band pass filters are star-connected.

According to an embodiment of the invention, the converter comprises further three converter branches, which are star-connected at a star point and which provide a phase output at an end of each branch, wherein each converter branch comprises a branch inductor connected between the converter cells of the converter branch and either the phase output or the star point.

Also in this case, each converter cell may comprise a full bridge. Such a star-connected chain-link converter may also benefit from the band pass filter.

For such a converter, a band pass filter may be connected in parallel to the converter cells of each converter branch, a band bass filter may be connected in parallel to each branch inductor, a band bass filter may be connected with one end between the branch inductor and the converter cells of a first converter branch and another end of the band pass filter may be connected between the branch inductor and the converter cells of a second branch. In the last case, the band pass filters may be delta-connected with each other.

A further aspect of the invention relates to a method for balancing cell capacitor voltages in converter cells of a modular multilevel converter. The method may be performed by a controller of the converter supported by electric hardware components connected to the circuit of the converter, such as the band pass filter.

It has to be understood that features of the method as described in the above and in the following may be features of the converter as described in the above and in the following and vice versa.

According to an embodiment of the invention, the method comprises switching at least two converter cells of at least one converter branch of the converter with pulse width modulation according to a predefined switching frequency (in particular with unmodified phase shifted carrier pulse width modulation as described above), each converter cell comprising a cell capacitor and a semiconductor switch for connecting the cell capacitor to the branch and for bypassing the cell capacitor, and balancing cell capacitor voltages with a band pass filter connected to the converter branch, which is tuned to a multiple of the switching frequency. With the method, a simple control method may be supported by cell capacitor voltage balancing provided by a physical band pass filter.

The large number of converter cells and the dispersed nature of a converter with N > 3 may make a controller relatively complex, since care may have to be taken to communicate with all converter cells with a minimum time delay.

For many (if not all) applications of the converter it may be beneficial to shift the non-fundamental (i.e. switching) harmonics in the unfiltered output voltage to as high a frequency as possible. This may have benefits on both the THD of the output current and the magnitude of the common mode currents. To achieve this, phase shifted pulse width modulation is often used. A second control objective may be achieving balance in the cell capacitor voltages.

According to an embodiment of the invention, the method further comprises measuring a current through the band pass filter and determining a difference in cell capacitor voltages from the measured current. The currents which do not have frequencies of the number of cells per branch N times the switching frequency fₛ may be a measure for the unbalance in the capacitor voltages. These currents are selected by the band pass filter and may be measured in the band pass filter. Differences in the cell capacitor voltages may be determined by measuring the current in the band pass filter.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a modular multilevel converter according to an embodiment of the invention.
Fig. 2 schematically shows a converter cell for the converter of Fig. 1.
Fig. 3 shows a diagram explaining carrier based pulse width modulation.
Fig. 4 schematically shows a filter circuit for the converter of Fig. 1.
Fig. 5 schematically shows a filter circuit for the converter of Fig. 1.
Fig. 6 schematically shows a filter circuit for the converter of Fig. 1.
Fig. 7 schematically shows a filter circuit for the converter of Fig. 1.
Fig. 8 schematically shows a modular multilevel converter according to a further embodiment of the invention.
Fig. 9 schematically shows a converter cell for the converter of Fig. 8.
Fig. 10 schematically shows a modular multilevel converter according to a further embodiment of the invention.
Fig. 11 schematically shows a modular multilevel converter according to a further embodiment of the invention.
Fig. 12 schematically shows a modular multilevel converter according to a further embodiment of the invention.
Fig. 13 schematically shows a modular multilevel converter according to a further embodiment of the invention.
Fig. 14 schematically shows a modular multilevel converter according to a further embodiment of the invention.
Fig. 15 schematically shows a modular multilevel converter according to a further embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

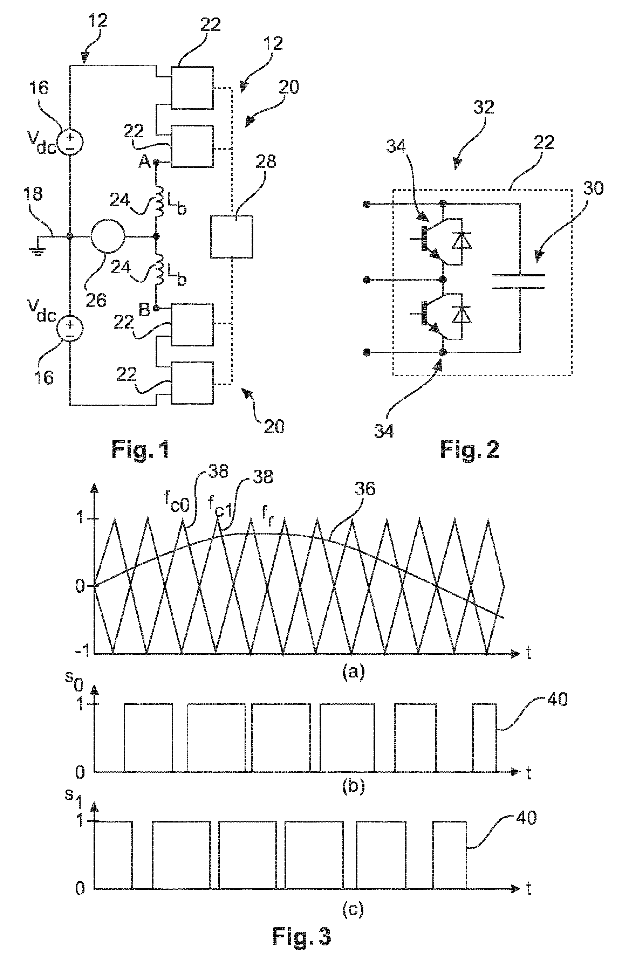

Fig. 1 shows a modular multilevel converter 10 interconnecting a DC link 12 with a phase output 14. The DC link 12 comprises two DC sources 16 interconnected in series and connecting to a grounding point 18 between them. The converter comprises two series-connected branches 20, which are connected in parallel to the DC link 12.

Each branch 20 comprises a plurality of converter cells 22 (here two), which are connected in series. Furthermore, each branch 20 comprises a branch inductor L_{b}, 24, which is connected between the converter cells 22 and the phase output 14.

A load 26 is connected between the phase output 14 and the grounding point 18.

The converter 10 furthermore comprises a controller 28 for controlling the converter cells 22.

It has to be understood that the converter 10 may have more than one phase. In this case, the converter 10 may comprise two or more arms of two series-connected branches 10 connected in parallel to the DC link.

Fig. 2 shows a converter cell 22 for the converter 10 of Fig. 1. The converter cell comprises a cell capacitor 30 connected in parallel to a half bridge 32. The half bridge 32 comprises two semiconductor switches 34, which are controlled by the controller 28 and which may connect the capacitor 30 to the respective converter branch 20 or may bypass the capacitor 30.

Fig. 3 shows a diagram describing unmodified phase shifted carrier pulse width modulation, which may be performed by the controller 28. With the diagram, the control of the upper or lower converter branch 20 with two converter cells 22 is described. For example, the other one of the branches may be controlled with inverted switching signals.

Part (a) of the diagram shows a reference signal fᵣ, 36 and two carrier signals f_{c0}, f_{c1}, 38 over time t. For example, the reference signal 36 may be provided by an outer control loop. The two carrier signals 38 are periodic signals (here sawtooth signals) having a frequency of fₛ and which are phase shifted with respect to each other by 180°. In general, a control method for N cells per branch may have N carrier signals that are phase shifted by 360°/N with respect to each other.

Parts (b) and (c) show how the upper converter cell 20 and the lower converter cell 20 are switched. Every time, the respective carrier signal 38 becomes higher than the reference signal 36, the respective cell 22 is connected to the branch 20 (switching signal s₀, s₁, 40 is 1). In the case, the respective carrier signal 38 becomes lower, the respective cell is disconnected from the branch 20 and bypassed.

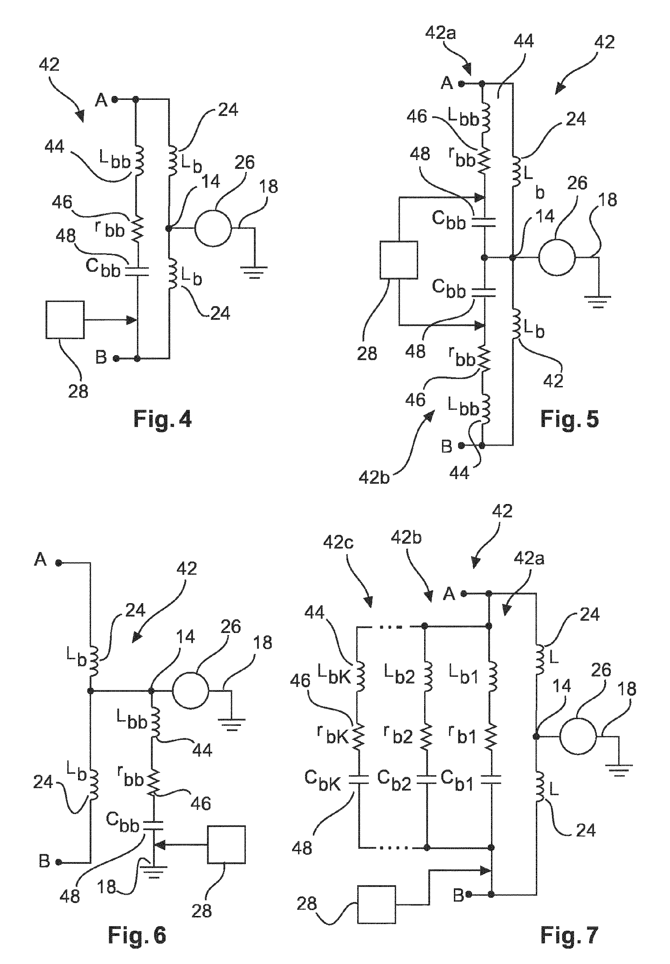

Fig. 4 to 7 show auxiliary filter circuits that may be connected between points A and B of the converter 10 of Fig. 1. Each filter circuit comprises a band pass filter 42 comprising a filter inductor L_{bb}, 44, a filter resistor r_{bb}, 46 and a filter capacitor C_{bb}, 48 connected in series. The filter resistor 46 is optional or may be seen as the virtual resistance of the band pass filter 42.

The band pass filter 42 improves the natural balancing properties of the converter 10 operating with unmodified phase shifted carrier pulse width modulation. The band pass filter 42, as shown in Fig 4, may comprise an RLC notch filter connected across the branch decoupling inductors. For a converter 10 with N converter cells 22 per converter branch 20, the resonant frequency (or frequencies) of the band pass filter 42 is tuned to any multiple of the switching frequency fₛ that is not a multiple of N.

Furthermore, the controller 28 may be adapted for measuring the current in the band pass filter 42. From the current, an unbalance in the cell capacitor voltages of the converter cells 22 may be determined.

Fig. 5 shows, that the band pass filter 42 may be connected in parallel to both branch inductors 24.

Fig. 5 shows a band pass filter 42 comprising two single filters 42a, 42b, each of which is connected in parallel to one of the branch inductors 24. The midpoint of the two series-connected filters 42a, 42b is connected to the phase output 14. In Fig. 5, the controller 28 may measure the current in both single filters 42a, 42b for determining an unbalance in the capacitor voltages.

Fig. 6 shows a band pass filter 42 interconnected between the phase output 14 and the grounding point.

Fig. 7 shows a band pass filter 42 comprising a number of single band pass filters 42a, 42b, 42c connected in parallel. Each single band pass filter 42a, 42b, 42c has a different resonance frequency being a multiple of fₛ. The band pass filter of Fig. 7 is connected like the band pass filter of Fig. 4. However, also different types of connections as shown above and in the following may be replaced by multiple single band pass filters 42a, 42b, 42c as shown in Fig. 7.

In addition to the band pass filter circuits for the classical "double half-bridge star" modular multilevel converter configuration as shown in Fig. 1, the following figures relate to a full bridge type modular multilevel converter (also called chain-link converter).

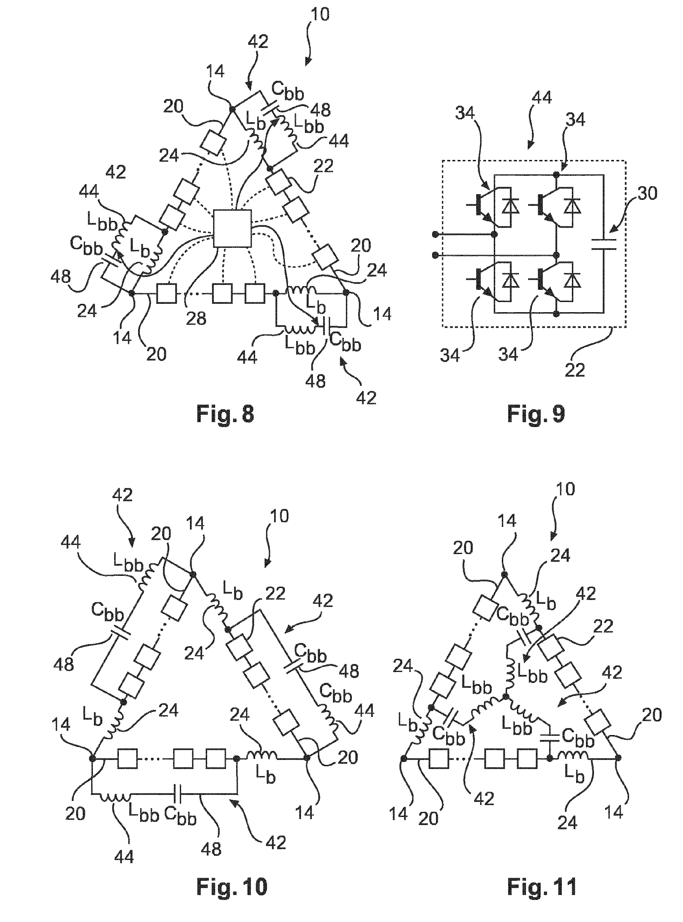

Fig. 8, 10 and 11 show a modular multilevel converter 10 (chain-link converter) comprising three converter branches 20 that are delta-connected with each other. At their connection points, three phase outputs 14 are provided.

Fig. 9 shows a converter cell 22 of the converter 10 of Fig. 8, 10 and 11, the converter cell comprises a cell capacitor 30 and a full bridge 44 of four semiconductor switches 34. With the full bridge 44, the cell capacitor 30 may be bypassed and connected in two directions to its converter branch 20.

In Fig. 9, a band pass filter 42 is connected in parallel to each branch inductor 24.

In Fig. 10, a band pass filter 42 is connected in parallel to the converter cells 22 of each branch.

In Fig. 11 (like in Fig. 9 and 10), one end or leg of a band pass filter 42 is connected between the branch inductor 24 and the converter cells 22 of the branch 20. The other ends of the band pass filters 42 are star-connected.

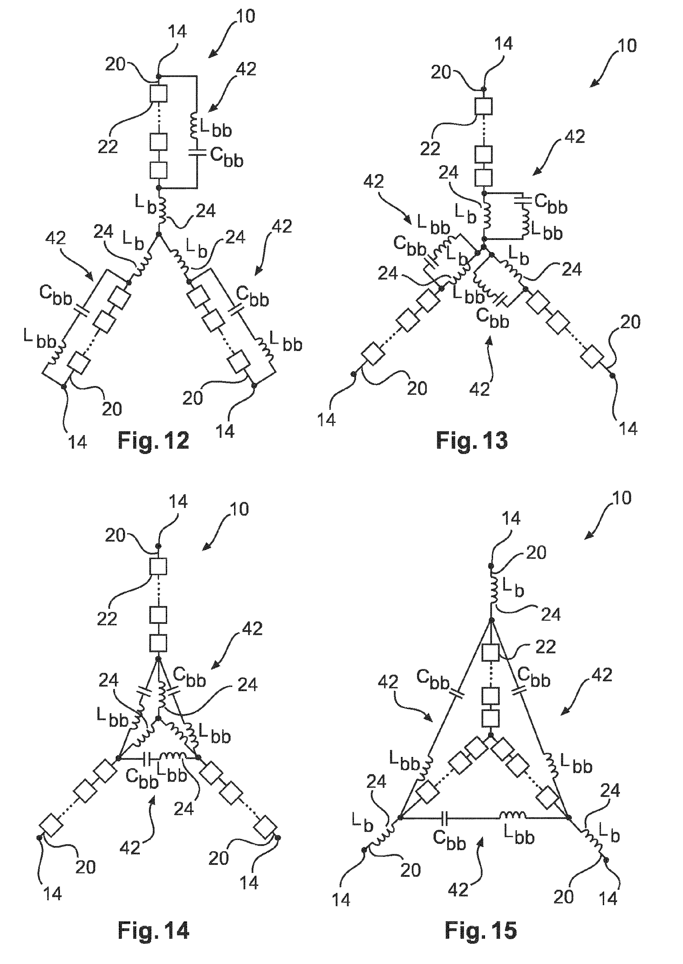

Fig. 12 to 15 show modular multilevel converters 10 (chain-link converter) comprising three converter branches 20 that are star-connected with each other. At their other ends, three phase outputs 14 are provided. The branch inductor 24 of each branch 20 may be either on the side of the star connection or on the side of the phase output 14. The converter cells 22 may be full bridge converter cells 22 as shown in Fig. 9.

In Fig. 12 to 15 (as well as in Fig. 8, 10 and 11), each converter branch 20 is associated with one band pass filter 42, which, with one end, is connected between the converter cells 22 and the branch inductor.

In Fig. 12, the band pass filters 42 are connected in parallel to the converter cells 22 of the respective branch 20. I.e. they are connected with their other end to the respective phase output 14.

In Fig. 13, the band pass filters 42 are connected in parallel to the branch inductors 24. I.e. they are connected with their other ends to the star point of the converter 10.

In Fig. 14 and 15, the band pass filters 42 are connected with one end to a first branch 20 and with the other end to a second branch 20. In such a way, the three band pass filters 42 are delta-connected.

As indicated in Fig. 8, for all chain-link converters 10, the controller 28 is adapted for controlling the converter cells 22 with pulse width modulation, for example as described with respect to Fig. 3. Furthermore, the controller 28 may be adapted for measuring the current through all band pass filters 42 connected to the respective converter circuit and for determining an unbalance in the converter 10 based on these measured currents.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: modular multilevel converter
- 12: DC link
- 14: phase output
- 16: DC source
- 18: grounding point
- 20: converter branch
- 22: converter cell
- 24: branch inductor
- 26: load
- 28: controller
- 30: cell capacitor
- 32: half bridge
- 34: semiconductor switch
- 36: reference signal
- 38: carrier signal
- 40: switching signal
- 42: band pass filter
- 42a, 42b, 42c: single band pass filter
- 44: full bridge

## Claims

1. A modular multilevel converter (10), comprising:
at least one converter branch (20) with at least two series-connected converter cells (22), each converter cell (22) comprising a cell capacitor (30) and at least one semiconductor switch (34) for connecting the cell capacitor (30) to the branch (20) and for bypassing the cell capacitor (30);
a controller (28) for controlling the converter cells (22) of the converter (10) with pulse width modulation according to a predefined switching frequency;
a band pass filter (42) connected to the converter branch (20), which is tuned to a multiple of the switching frequency.

2. The converter (10) of claim 1,
wherein the band pass filter (42) comprises an inductor (44) and a capacitor (48) connected in series.

3. The converter (10) of claim 1 or 2,
wherein the band pass filter (42) comprises a resistor (46) connected in series with a capacitor (48) and/or an inductor (44).

4. The converter (10) of one of the preceding claims,
wherein the band pass filter (42) comprises at least two single band pass filters (42a, 42b).

5. The converter (10) of one of the preceding claims,
wherein the band pass filter (42) is connected in parallel to the converter cells (22) of the converter branch (20).

6. The converter (10) of one of the preceding claims,
wherein the converter branch (20) comprises a branch inductor (24) connected in series with the converter cells (22) of the converter branch (20);
wherein the band pass filter (52) is connected with one end between the converter cells (22) and the branch inductor (24).

7. The converter (10) of claim 6,
wherein the band pass filter (42) is connected in parallel to the branch inductor (24).

8. The converter (10) of one of the preceding claims, further comprising:
two converter branches (20) connected in series between a DC link (12) and providing a phase output (14) between the two converter branches (20);
wherein each converter branch (20) comprises a branch inductor (24) connected between the converter cells (22) of the converter branch (20) and the phase output (14);
wherein:
the band pass filter (42) is connected in parallel to both branch inductors (24); or
wherein a band bass filter (42a, 42b) is connected in parallel to each branch inductor (24); or
wherein the band pass filter (42) is interconnecting the phase output (14) and a grounding point (18).

9. The converter (10) of one of the preceding claims, further comprising:
three converter branches (20), which are delta-connected and which provide a phase output (14) at an end of each converter branch (20);
wherein each converter branch (20) comprises a branch inductor (24) connected between the converter cells (22) of the converter branch and a phase output (14);
wherein:
a band pass filter (42) is connected in parallel to the converter cells (22) of each converter branch (20); or
wherein a band bass filter (42) is connected in parallel to each branch inductor (24); or
wherein a band bass filter (42) is connected with one end between the branch inductor (24) and the converter cells (22) of each converter branch (20) and other ends of the band pass filters (42) are star-connected.

10. The converter (10) of one of the preceding claims, further comprising:
three converter branches (20), which are star-connected at a star point and which provide a phase output (14) at an end of each branch (20);
wherein each converter branch (20) comprises a branch inductor (24) connected between the converter cells (22) of the converter branch (20) and either the phase output (14) or the star point;
wherein:
a band pass filter (42) is connected in parallel to the converter cells (22) of each converter branch (20); or
wherein a band bass filter (42) is connected in parallel to each branch inductor (24); or
wherein a band bass filter (42) is connected with one end between the branch inductor (24) and the converter cells (22) of a first converter branch (20) and another end of the band pass filter (42) is connected between the branch inductor (24) and the converter cells (22) of a second branch (20).

11. The converter (10) of one of the preceding claims,
wherein for pulse width modulation, a converter cell (22) is associated with a periodic carrier signal (38) of the switching frequency and the controller (28) is adapted for switching the converter cell (22), when a reference signal (36) crosses the carrier signal (38).

12. The converter (10) of one of the preceding claims,
wherein the converter cell (22) comprises a half bridge (32) for connecting the cell capacitor (30) to the branch (20) and for bypassing the cell capacitor (30); or
wherein the converter cell (22) comprises a full bridge (44) for connecting the cell capacitor (30) to the converter branch (20) and for bypassing the cell capacitor (30).

13. A method for balancing cell capacitor voltages in converter cells (22) of a modular multilevel converter (10), the method comprising:
switching at least two converter cells (22) of at least one converter branch (20) of the converter (10) with pulse width modulation according to a predefined switching frequency, each converter cell (22) comprising a cell capacitor (30) and at least one semiconductor switch (34) for connecting the cell capacitor (30) to the branch (20) and for bypassing the cell capacitor (30);
balancing cell capacitor voltages with a band pass filter (42) connected to the converter branch (20), which is tuned to a multiple of the switching frequency.

14. The method of claim 13, further comprising:
measuring a current through the band pass filter (42);
determining a difference in cell capacitor voltages from the measured current.
